# EUROPÄISCHE PATENTANMELDUNG

(11) **EP 1 933 107 A1**
(43) Veröffentlichungstag der Anmeldung: **18.06.2008**
(21) Anmeldenummer: 07076071.5
(22) Anmeldetag: 20.08.2004
(51) Int. Cl.: F28G 9/00, F28G 1/16

(54) **Mehrkanaldüsenkopf und Vorrichtung zur Reinigung von Lamellen aufweisenden Wärmeaustauschern in raum lufttechnischen Anlagen**

(30) Priorität: 20.08.2003 DE 10339729
(62) Teilanmeldung aus: 04090324.7
(71) Anmelder: Möritz, Martin, Dr.-Ing., 14129 Berlin (DE); Peters, Hans, Dr.-Ing., 13353 Berlin (DE)
(72) Erfinder: Möritz, Martin, Dr.-Ing., 14129 Berlin (DE); Peters, Hans, Dr.-Ing., 13353 Berlin (DE)
(74) Vertreter: Sander, Rolf

(57) **Zusammenfassung**

Die Erfindung betrifft eine Vorrichtung und einen Mehrkanaldüsenkopf (13) zur Reinigung von Wärmeaustauscherregistern (3) mit Lamellen, die insbesondere in Klimaanlagen von Gebäuden und Fahrzeugen aufgestellt sind. Durch die erfindungsgemäße Vorrichtung, bei der Düsen (12) eines Mehrkanaldüsenkopfes (13) zwischen den Lamellen (10) positioniert werden, wird eine Beschädigung der Lamellen (10) sicher vermieden und die Reinigung kann zusätzlich mit deutlich höheren Drücken erfolgen. Zur Ausrichtung des Mehrkanaldüsenkopfes (13) bezüglich der Lamellen (10) sind Kammfinger (14) vorgesehen, die sich in den von den Lamellen begrenzten Zwischenraum einführen lassen. In den Kammfingern (14) sind die Düsen (12) angeordnet. Die exakte Ausrichtung der Düsen (12) durch die Kammfinger (14) führt dazu, dass die Reinigung gründlicher, vollständiger, schneller, beschädigungsfrei und auch für tiefere Register (3), die bisher nicht vollständig, d.h. durchgängig zu reinigen waren, erfolgen kann.

## Beschreibung

Die Erfindung betrifft einen Mehrkanaldüsenkopf zur Reinigung von Lamellen eines Wärmeaustauscherregisters, der mehrere Düsen aufweist.

Die Erfindung betrifft ferner eine Vorrichtung zum Reinigen von Lamellen eines Wärmeaustauscherregisters mit einem mehrere Düsen aufweisenden Mehrkanaldüsenkopf und einer mit dem Mehrkanaldüsenkopf verbundenen Hochdruckpumpe, welche mit einem Reinigungsmittelzulauf verbunden ist.

Ein solcher Mehrkanaldüsenkopf ist aus der DE 295 21 413 U1 bereits bekannt. Dort ist eine Reinigungsvorrichtung für Lamellen eines Wärmeaustauscherregisters beschrieben. Die Reinigungsvorrichtung weist ein stabförmiges Mehrdüsenrohr auf, das innerhalb einer von dem Wärmeaustauscherregister beabstandeten Führung gelagert ist. Ferner ist ein Scherenantrieb zum Auf- und Abbewegen des Mehrdüsenrohres vorgesehen. Die Düsen des Mehrdüsenrohres sind jedoch in Sprührichtung mehrere Zentimeter vor den Kühl- bzw. Heizleitungen entfernt aufgestellt. Das Reinigungsmittel kann daher nur mit begrenztem Druck auf das Wärmeaustauscherregister gesprüht werden, um die in der Regel mechanisch schwach ausgebildeten Lamellen nicht zu beschädigen.

Die DE 28 33 006 A1 beschreibt eine Reinigungseinrichtung für Kühlelemente eines Trockenkühlturmes, wobei die Kühlelemente aus Rippenrohren zusammengesetzt sind. Zur Reinigung der Kühlelemente ist eine Reinigungsvorrichtung vorgesehen, die ein Düsengehäuse mit parallel zueinander angeordneten Zwischenwänden umfasst. Das Düsengehäuse ist mit einem Druckluftanschluss und einem Saugluftanschluss ausgerüstet, wobei der Druckluftanschluss mit seiner Druckluftdüse in Querrichtung zu den Zwischenwänden verfahrbar ist. Nur ein Teil der von den Zwischenwänden begrenzten Zwischenräume wird mit aus der Druckluftdüse austretender Druckluft beaufschlagt. Die über den Saugluftanschluss abgesaugte verunreinigte Luft wird über eine Messeinrichtung zum Erfassen der Schmutzbelastung, einen Kompressor und schließlich über eine Abscheidevorrichtung geführt, die zur Reinigung der Luft vorgesehen ist. Der Ausgang der Abscheidevorrichtung ist mit dem Druckluftanschluss verbunden, so dass die gereinigte Luft als Druckluft wieder in das Druckluftgehäuse eingeblasen werden kann. Die Zwischenwände des Düsengehäuses sind zu ihrer Ausrichtung bezüglich der Kühlelemente an ihrer den Kühlelementen zugewandten Stirnseite sägezahnartig ausgebildet, wobei die hervorspringenden Sägezähne in einer Seitenansicht eine rechteckige Gestalt aufweisen. Die Stirnseite der Kühlelemente weist hingegen eine Kontur auf, die formkomplementär zur Kontur der Zwischenwände ist. Auf diese Weise können die Zwischenwände des Düsengehäuses exakt auf die Stirnseite der Kühlelemente aufgesetzt werden, wobei es zur Ausrichtung der Zwischenwände bezüglich der Kühlelemente kommt.

Aus der US 4,566,890 ist ein sich selbst reinigender Kühler bekannt, der für einen Einsatz im Zusammenhang mit der Herstellung von Glasfasern vorgesehen ist. Bei der Glasfaserherstellung ist das Einhalten vorgegebener Temperaturbereiche für die Qualität der Glasfaser entscheidend. Die beschriebene Kühleinrichtung dient dazu, die Umgebungstemperatur bei der Glasfaserbildung nicht zu hoch werden zu lassen. Dazu weist die Kühleinrichtung Kühlrippen auf, die an einer Seite fest mit einem Kühlkörper verbunden sind, der von einer Kühlflüssigkeit durchströmt wird. In dem Kühlkörper erstreckt sich ferner ein mit einer Reinigungsflüssigkeit befüllter Reinigungskanal, von dem aus sich Düsenkanäle zu Austrittsdüsen hin erstrecken, die jeweils in einen Zwischenraum münden, der von zwei benachbarten Kühlrippen begrenzt ist. Die aus den Düsen unter Druck austretende Reinigungsflüssigkeit wird daher genau zwischen die Kühlrippen gesprüht.

In der US 1,786,182 ist ein Mehrdüsenrohr zum Reinigen von Durchgängen oder Zwischenräumen beschrieben. Das Mehrdüsenrohr weist einen Rohrabschnitt auf, in dem Öffnungen vorgesehen sind, wobei die Öffnungen ein Gewinde aufweisen und zur Aufnahme von Düsen eingerichtet sind. Das Mehrdüsenrohr wird von Hand bezüglich der Zwischenräume von äquidistant zueinander angeordneten Lamellen ausgerichtet.

Die US 1,786182 beschreibt ein vor den Lamellen eines Registers montiertes Mehrdüsenrohr, wobei die Düsen in Öffnungen des Rohres eingeschraubt sind. Dabei weisen die Düsen eine Düsenöffnung auf, die bezüglich der Öffnung, in der die Düse eingeschraubt ist, exzentrisch angeordnet ist. Auf Grund dieser exzentrischen Anordnung kann durch Verdrehen der Düse in der Öffnung des Rohres die Lage der Düsenöffnung bezüglich der Längsrichtung des Rohres variiert werden. Nach der festen Montage des Mehrdüsenrohres kann die Düsenöffnung daher an die jeweilige Lage eines zu reinigenden Lamellenzwischenraumes angepasst werden.

Weitere Reinigungsvorrichtungen für Wärmeaustauscher sind in der US 4,497,363 und in der DE 19745538 A1 beschrieben.

Die DE 197 45 538 C2 beschreibt ein Verfahren und eine Einrichtung zur Reinigung von Klimaanlagen, insbesondere von Fahrzeugen durch Aufsprühen eines Reinigungsmittels auf Verdampferschlangen in den Klimaanlagen mit einem Druck von 2 bis 15 bar. Ziel ist es dabei, das Reinigungsmittel derart in einem Schwall auf die Oberfläche der Verdampferschlangen aufzubringen, dass diese innerhalb von 3 bis 20 Sekunden im Wesentlichen vollständig überspült werden. Das Reinigungsmittel wird unter Verwendung einer Runddüse im Abstand von einigen Zentimetern vor den Verdampferschlangen aufgebracht.

Gegenstand der WO 94/17356A1 ist ein Verfahren und eine Vorrichtung zur automatischen Reinigung von Klimaanlagen von Gebäuden und Fahrzeugen. Das Verfahren besteht darin, der Wärmeaustauscheroberfläche der Klimaanlage periodisch mit Hilfe einer Flüssigkeitszufuhreinrichtung eine Behandlungsflüssigkeit zuzuführen, die sich auf der Wärmeaustauscheroberfläche verteilt.

Auch hierbei erfolgt das Aufsprühen der Behandlungsflüssigkeit in Sprührichtung gesehen im Abstand von mehreren Zentimetern vor den Wärmeaustauscheroberflächen. Die Behandlungsflüssigkeit ist auch zur Abtötung von auf den Wärmeaustauscheroberflächen vorhandenen Mikroorganismen geeignet.

Die DE 4033 321 A1 beschreibt eine Vorrichtung zur Reinigung der Wärmeaustauscher eines Kraftfahrzeug-Klimagerätes, welche zur Reinigung in das Klimagerät in einfacher Weise eingebracht und anschließend wieder entfernt werden kann. Diese im Wesentlichen als Sprührohr ausgebildete Sprühvorrichtung wird von einem Deckel getragen, der eine im Gehäuse des Klimagerätes vorgesehene Öffnung zum Einbringen der Sprühvorrichtung verschließt. Hierdurch wird die Sprühvorrichtung gleichzeitig in Sprührichtung gesehen im Abstand von einigen Zentimetern vor den Wärmeaustauschern positioniert.

Wärmeaustauscher weisen eine Vielzahl technischer Anwendungen auf. Der Wärmeaustausch kann hierbei zwischen flüssigen, gasförmigen und festen Medien erfolgen.

In Lüftungsanlagen von Gebäuden und Fahrzeugen dienen Wärmeaustauscher zum Erwärmen, Kühlen oder Entfeuchten der Luft bzw. zur Wärmerückgewinnung. Hierzu bestehen die Wärmeaustauscher (außer z.B. Rotations- oder Kreuzstrom-Wärmerückgewinnungsregister) in der Regel aus einer quer zur Luftströmungsrichtung im Luftstrom verlegten Anordnung von Rohren, welche von einem Heiz- oder Kühlmedium durchflossen werden. Das durch die Rohrleitungen strömende Medium gibt seine Wärmeenergie an die vorbeiströmende Luft ab (Erhitzer) oder nimmt sie von der Luft auf (Kühler).

Um den beschriebenen Wärmeübergang und damit die Effektivität der Wärmeaustauscher zu erhöhen, werden die im Luftstrom verlegten Rohranordnungen zumeist zusätzlich mit so genannten Lamellen ausgestattet. Diese Lamellen bestehen aus Metallplatten mit einer Materialstärke von zumeist nur 0,1 - 0,3 mm, welche vorwiegend senkrecht längs zur Luftströmungsrichtung nebeneinander in regelmäßigen Abständen (zwischen 1-6 mm) installiert und quer von den Rohranordnungen für das Heiz- oder Kühlmedium durchzogen sind. Eine solche Anordnung von Rohren und Lamellen nennt man in der Lüftungstechnik auch Register. Die Wärme wird von den Rohrleitungen auf die Lamellen und von dort auf die Luft übertragen (Erhitzer) oder umgekehrt (Kühler). Ziel der Konstruktion der Lamellen ist es, die Oberfläche, über welche die Energie übertragen wird, so groß wie möglich zu machen, um einen möglichst hohen Energieübergang zu erreichen.

Die Erhöhung der Oberfläche innerhalb der Register durch Lamellen führt jedoch neben dem beschriebenen gewünschten Effekt der Oberflächenvergrößerung auch zu einer ungewollten Zunahme von Ablagerungen, vor allem auf den Lamellen. In Lüftungsanlagen von Gebäuden und Fahrzeugen lagern sich auf den Wärmeaustauschern beispielsweise Mikroorganismen, organischer oder anorganischer Staub, Ruß und sonstige Verunreinigungen ab.

Diese Zunahme der Ablagerungen auf den Lamellen führt beispielsweise zu folgenden Nachteilen:
- Verringerung / Verschlechterung der Wärmeübertragung aufgrund der isolierenden Wirkung der Schmutzschicht;
- Erhöhung des Durchströmungswiderstandes der Register aufgrund der Verringerung der frei durchströmbaren Querschnittsfläche.

Bei Wärmeaustauschern in Lüftungsanlagen von Gebäuden und Fahrzeugen können zusätzlich folgende Probleme auftreten:
- bei Lufterhitzern: Geruchsprobleme durch Desorbtion von Gasen aufgrund der Erwärmung der Ablagerungen;
- bei Luftkühlern: Keimwachstum im Kondensat sowie auf den Kühlerlamellen und infolge dessen Freisetzung von Mikroorganismen bzw. deren allergen oder toxisch wirkenden Stoffwechsel- und Zerfallsprodukten, wie z.B. MVOC's, Endotoxie oder dergleichen.

Um diese Mängel zu vermeiden, müssen die Wärmeaustauscherlamellen in regelmäßigen Abständen gereinigt werden. Für Kühler / Entfeuchter in Lüftungsanlagen von Gebäuden schreibt die neue VDI-Richtlinie 6022 (Blatt 1, April 2006) beispielsweise eine halbjährliche Reinigung vor, um Hygienemängel an den Kühlregistern und die damit möglicherweise verbundenen gesundheitlichen Beschwerden von Personen in den belüfteten Räumen künftig zu vermeiden. Für Lüftungsanlagen von Fahrzeugen gelten vergleichbare Anforderungen gemäß VDI 6032 (Februar 2004).

Die Reinigung von Wärmeaustauscherregistern erfolgt heutzutage in der Regel mittels so genannter Wasser-Hochdruck-Reinigungsgeräte. Hierbei wird auf einer Seite des Registers mit einem Abstand von ca. 10 - 50 cm über eine Hochdruckdüse Kaltwasser bzw. Stadtwasser mit oder ohne Zusatzstoffen mit einem maximalen Druck von ca. 200 bar mit dem Ziel aufgebracht, dass der Wasserstrahl das Wärmeaustauscherregister durchdringt und dabei auf den Lamellen und/oder den Rohrleitungen vorhandenen Schmutz aufnimmt und aus dem Register spült.

Gemäß dem Stand der Technik erfolgt die Versprühung des Reinigungsmittels in Sprührichtung gesehen im Abstand von einigen Zentimetern vor den Wärmeaustauscherregistern. Dies wirkt sich aus folgenden Gründen nachteilig auf den Reinigungserfolg dieser Verfahren aus:
Dadurch, dass der von der Düse erzeugte Strahl einen Öffnungswinkel aufweist, trifft selbst bei fluchtender / paralleler Ausrichtung der Düse mit den Lamellen nur ein Teil des Reinigungsmittelstrahls auch tatsächlich fluchtend oder parallel zu den Lamellen auf die Lamellenenden auf. Der restliche Teil des Strahls, sozusagen der Streuanteil, trifft schräg auf die Lamellenendbereiche auf. Infolge dessen entstehen in diesen Bereichen Kräfte, die in der Praxis häufig zum Verbiegen dieser mechanisch schwachen Endbereiche der Lamellen führen. Bei Lamellen, welche vor der Reinigung bereits verbogen waren, führt selbst ein fluchtender Reinigungswasserstrahl zu einer noch stärkeren Verbiegung oder sogar zu einer Beschädigung der Lamellen.
Die Gefahr der Verbiegung der Lamellenendbereiche ist umso größer, je schräger der Strahl bzw. die Streustrahlen auf die Lamellenendbereiche auftreffen. Weiterhin steigt die Gefahr der Verbiegung der Lamellenendbereiche mit zunehmender Geschwindigkeit des Wasserstrahls also mit steigendem Wasservolumenstrom und / oder Wasserdruck. Die Gefahr, dass der Reinigungsstrahl und dessen Streustrahlen schräg auf die Lamellen treffen, steigt mit der Entfernung, mit welcher der Strahl auf die Lamellen gerichtet wird, insbesondere dann, wenn dies freihändig geschieht. Bei den bekannten Systemen ist die Düse zumeist vor den Lamellen mit einem Abstand von 10 - 50 cm positioniert.

Um eine Beschädigung der Lamellen durch Verbiegen zu vermeiden, müssen daher bei den bekannten Verfahren Wasservolumenstrom, Wasserdruck und Wassergeschwindigkeit auf einen entsprechenden Wert begrenzt werden. Dadurch wird jedoch auch die Reinigungsleistung dieser Verfahren verringert und häufig auf ein Maß herabgesetzt, das für das Ablösen von Schmutzpartikeln von den seitlichen Oberflächen der Lamellen unzureichend ist.

Ferner entstehen bei den bekannten Verfahren aufgrund ihrer eingeschränkten Wirksamkeit ein unnötig hoher Energie-, Wasser-, Reinigungs- und Desinfektionsmittelverbrauch sowie unnötige Kosten durch erhöhten Zeit- und Personalaufwand.

Aufgabe der vorliegenden Erfindung ist es, einen Mehrkanaldüsenkopf und eine Vorrichtung der eingangs genannten Art bereitzustellen, durch die auch bei höheren Drücken und größeren Reinigungsmittelvolumenströmen eine beschädigungsfreie Reinigung von Wärmeaustauscherregistern mit Lamellen ermöglicht ist, so dass eine optimale Ausnutzung der Reinigungsleistung gewährleistet ist.

Die Erfindung löst diese Aufgabe ausgehend von dem eingangs genannten Mehrkanaldüsenkopf dadurch, dass die Düsen in einem in den Zwischenraum zwischen die Lamellen einführbaren Kammfinger angeordnet sind und jeder Kammfinger wenigstens eine Düse aufweist, wobei die Kammfinger so ausgestaltet sind, dass diese bei Aufsetzen des Mehrkanaldüsenkopfs auf die Stirnseiten der Lamellen die Düsen auf den von den Lamellen begrenzten Zwischenraum hin ausrichten.

Die Erfindung löst diese Aufgabe ausgehend von der eingangs genannten Vorrichtung durch einen wie oben ausgebildeten Mehrkanaldüsenkopf.

Erfindungsgemäß wird der Mehrkanaldüsenkopf direkt auf die Stirnseiten der Lamellen gesetzt. Dabei sorgen die an dem Mehrkanaldüsenkopf ausgebildeten Kammfinger für eine Ausrichtung der Düsen bezüglich des von den zu reinigenden Lamellen begrenzten Zwischenraumes. Auf diese Weise ist es möglich, das Reinigungsmittel mittels des Mehrkanaldüsenkopfes derart zwischen die Lamellen einzubringen bzw. einzusprühen, dass der aus den Düsen austretende Strahl des Reinigungsmittels an den Lamellen der Wärmeaustauscher vorbeiströmt, wobei er die auf den Seitenflächen der Wärmeaustauscherlamellen vorhandenen Schmutzablagerungen ablöst und diese mit dem Reinigungsmittel aus dem Register austrägt oder mit anderen Worten ausspült. Eine Beschädigung der Lamellen durch ein seitliches Auftreffen des mit hohem Druck eingesprühten Reinigungsmittels ist erfindungsgemäß vermieden.

Durch die Ausrichtung sind die Düsen nach dem Aufsetzen des Mehrkanaldüsenkopfes teilweise entweder unmittelbar vor, zwischen oder kurz hinter den Stirnseiten der Lamellen positioniert. Sind die Düsen bei Betrieb teilweise vor den Stirnseiten der Lamellen angeordnet, mündet ein Düsenabschnitt beispielsweise in einem in dem Kammfinger ausgebildeten Führungskanal, dessen in Strömungsrichtung gesehenes Ende / Öffnung hier ebenfalls als Düse bezeichnet wird.

Während bei den herkömmlichen Reinigungsvorrichtungen bei jeder Reinigung der Reinigungsmittelstrahl unweigerlich auch auf die Lamellenstirnflächen sowie auf die Lamellenendbereiche auftrifft und die oben genannte Beschädigungsgefahr hervorruft, wird erfindungsgemäß ein Auftreffen des Reinigungsmittelstrahls auf die Stirnseiten oder auf die an diese unmittelbar anschließenden Lamellenendbereiche weitgehend vermieden.

Ein weiterer Vorteil der Erfindung besteht darin, dass beim Einschalten des Druckwassererzeugers kein Rückschlag mehr erfolgt, so dass auch diese Ursache für Beschädigungen der Lamellen beim Reinigungsvorgang vermieden wird.

Durch das exakte Einbringen und Ausrichten des Reinigungsmittelstrahls wird das Einleiten von Biegekräften insbesondere in die Endbereiche der Lamellen vermieden. Auf diese Weise kann die Reinigung unter deutlich höheren Drücken erfolgen und daher gründlicher, vollständiger, schneller und vor allem beschädigungfrei durchgeführt werden. Erfindungsgemäß ist schließlich auch die Reinigung tieferer Wärmeaustauscherregister ermöglicht, deren vollständige d.h. durchgängige Reinigung mit herkömmlichen Verfahren, welche zur Vermeidung von Beschädigungen der Lamellen nur mit begrenzten Drücken arbeiten können, nicht möglich ist.

Die Düsen weisen zweckmäßigerweise einen Durchmesser zwischen 0,1 mm und 0,7 mm auf. Der Abstand der Kammfinger ist einführseitig größer als die Dicke der Lamellen.

Vorteilhafterweise wird der Mehrkanaldüsenkopf von Hand auf die Lamellen aufgesetzt. Die feste Installation des Mehrkanaldüsenkopfes ist aufwändig und kostenintensiv. Durch das Aufsetzen von Hand kann das Wärmeaustauscherregister gelegentlich beispielsweise durch Wartungspersonal gereinigt werden. Durch Auf- und Abwärtsbewegung des Mehrkanaldüsenkopfes von Hand wird die Oberfläche mehrerer Lamellen gleichzeitig gereinigt. Nach der Reinigung eines entsprechenden Teiles eines Lamellenpakets wird durch Versetzen des Mehrkanaldüsenkopfes der nächste Lamellenteil entsprechend gereinigt. Dieser Vorgang wird gegebenenfalls von der An- und Abströmseite des zu reinigenden Wärmeaustauscherregisters solange wiederholt, bis das gesamte Register gereinigt ist.

Aufgrund der Anordnung der quer zur Sprührichtung verlaufenden Rohrleitungen für das Heiz- / Kühlmedium ist es zur vollständigen Reinigung der Wärmeaustauscherregister erforderlich, die Reinigungsdüsen in verschiedenen Winkeln an die Stirnseite der Lamellen anzusetzen. Dies kann zum einen durch das entsprechende Neigen des Mehrkanaldüsenkopfes an seinem Griff erfolgen oder dadurch, dass an dem Mehrkanaldüsenkopf mehrere Düsenreihen vorgesehen sind, so dass die Reinigungsmittelstrahlen der Düsenreihen zueinander einen Winkeln, beispielsweise 45°, aufspannen.

Vorteilhafterweise verfügt der Mehrkanaldüsenkopf über auf die Stirnseiten der Lamellen aufsetzbare Arretierungsmittel zum Einstellen des Einsprühwinkels. Durch die an dem Mehrkanaldüsenkopf angebrachten Arretierungsmittel kann die Neigung des Mehrkanaldüsenkopfes auf einen beliebigen und frei wählbaren Winkel fest eingestellt werden und so beispielsweise an den Rohrverlauf des Wärmeaustauscherregisters angepasst werden. Anschließend kann die Neigung des Mehrkanaldüsenkopfes auf einen anderen Winkel eingestellt und der Reinigungsvorgang erneut durchgeführt werden. Auf diese Weise erfolgt die Reinigung effektiver. Ein Ausrichten des Mehrkanaldüsenkopfes von Hand entfällt, wodurch die Reinigung für das Bedienpersonal erleichtert ist.

Vorteilhafterweise ist das Reinigungsmittel eine Flüssigkeit. So besteht das Reinigungsmittel beispielsweise aus Wasser oder einer wässrigen Lösung.

Zur Erhöhung der Reinigungsleistung können dem versprühten flüssigen Reinigungsmittel Additive beigefügt werden, wie beispielsweise Detergenzien oder Desinfektionsmittel, beispielsweise auf der Basis von Aldehyden oder quaternären Ammoniumkomplexen.

Zweckmäßigerweise wird das Reinigungsmittel mit einem Druck von 50 bis 250 bar zwischen die Lamellen gesprüht. Bei diesen Drücken haben sich die besten Reinigungsergebnisse erzielen lassen.

Bei einem abweichenden Ausführungsbeispiel ist das Reinigungsmittel gasförmig. Gasförmige Reinigungsmittel können beispielsweise zur Anwendung gelangen, wenn die Umgebung des Wärmeaustauscherregisters empfindlich gegenüber Flüssigkeiten oder gar Feuchtigkeit ist.

Vorteilhafterweise erzeugen die Düsen des Mehrkanaldüsenkopfes einen Reinigungsmittelstrahl mit geringem Streuwinkel. Ein so gebündelter Reinigungsmittelstrahl fächert in dem von den Lamellen begrenzten Zwischenraum kontrolliert auf. Seitlich auf die Lamellen einwirkende Kräfte, die eine Verformung der Lamellen bewirken könnten, werden auf diese Art vermieden.

Vorteilhafterweise wird der Mehrkanaldüsenkopf an den Stirnseiten der Lamellen entlang geführt, so dass verbogene Lamellen durch die Kammfinger in ihre Ursprungsform zurück gebogen werden. Durch die Positionierung der Austrittsöffnung der Düsen zwischen den Lamellen wird gegenüber den herkömmlichen Verfahren nicht nur eine Beschädigung der Lamellen sicher vermieden. Die Lamellen werden gemäß dieser Weiterentwicklung des Verfahrens bei jedem Reinigungsvorgang "gekämmt" und auf diese Weise in die korrekte Form zurückversetzt, falls sie vor der Reinigung verbogen waren.

Vorteilhafterweise sind die Düsen des Mehrkanaldüsenkopfes in wenigstens einer Reihe angeordnet. Auf diese Weise können die von dem Mehrkanaldüsenkopf beim Reinigen erfassten Lamellen gleichmäßig behandelt werden.

Vorteilhafterweise sind die in einer Reihe angeordneten Düsen gleichmäßig voneinander beabstandet, wobei der Abstand in der Regel zwischen 1 - 6 mm beträgt. Ein auf diese Art weitergebildeter Mehrkanaldüsenkopf ist an die Lamellenabstände üblicher Wärmeaustauscherregister angepasst.

Zweckmäßigerweise sind an mindestens einem Kammfinger mehr als eine Düse angeordnet. Bei einer diesbezüglichen Weiterentwicklung sind die Düsen an wenigstens einem der Kammfinger in verschiedenen Winkeln zueinander angeordnet. Hierdurch wird das Reinigungsmittel in Form mehrerer Strahlen, die miteinander einen Winkel aufspannen, zwischen die Lamellen gesprüht. Die sich in Querrichtung durch die zu säubernden Zwischenräume erstreckenden Heizungs- / Kühlrohre schotten in Sprührichtung eines Strahls unmittelbar hinter ihnen gelegene Abschottbereiche ab. Bei mehrstrahligen Kammfingern überstreichen die jeweils anderen Strahlen jedoch diesen Abschottbereich, so dass der Lamellenzwischenraum vollständig gereinigt wird.

Vorteilhafterweise weist der Mehrkanaldüsenkopf einen Griff auf. Der Griff ist beispielsweise stab- oder lanzenförmig ausgebildet und erleichtert die Handhabbarkeit des Mehrkanaldüsenkopfes. Weitere Vorteile ergeben sich bei einem Griff, der gekrümmt oder winkelig ausgebildet ist.

Vorteilhafterweise ist der Griff über einen Führungsarm mit einer Verbindungsachse verbunden.

Weiterhin ist es zweckmäßig, dass die Kammfinger einführseitig verjüngt ausgebildet sind. Durch die Verjüngung bilden sich mit anderen Worten Einführschultern aus, mit denen das anfängliche Einführen oder Einfädeln der Kammfinger zwischen die Lamellen vereinfacht wird.

Vorteilhafterweise ist der Abstand benachbarter Kammfinger einführseitig mindestens doppelt so groß wie die Dicke der Lamellen. Der einführseitig große Abstand der Kammfinger vereinfacht das anfängliche Einfügen der Kammfinger zwischen die Lamellen. Die Abstände der Lamellen eines Wärmeaustauscherregisters variieren in der Regel. Der im Vergleich zur Lamellendicke vergrößerte Abstand der Kammfinger an ihrem Einführende trägt diesem Umstand Rechnung und ermöglicht selbst bei größeren Abstandsschwankungen ein leichtes Einführen der Kammfinger.

Weiterhin kann es zweckmäßig sein, dass an dem vom Einführende abgewandten Ende der Kammfinger Ausrichtungsschultern ausgebildet sind. Die Ausrichtschultern richten die Düsen erst dann aus, wenn die Kammfinger bereits zwischen die Lamellen eingeschoben wurden. Somit sind sowohl ein einfaches Einführen der Kammfinger als auch eine genaue Ausrichtung der Düsen sowie eine optimale Korrektur von verbogenen Lamellen ermöglicht.

Vorteilhafterweise ist ein mechanisch widerstandsfähiger Innenabschnitt vorgesehen, an dem ein die Kammfinger ausbildender Abschnitt aus einem weichen Werkstoff gehalten ist. Der Innenabschnitt besteht beispielsweise aus einem metallischen Werkstoff, während der weichere Abschnitt aus einem Kunststoff gefertigt ist. An dem metallischen Innenabschnitt ist der Kunststoffabschnitt befestigt. Der Innenabschnitt weist eine große Materialfestigkeit auf, so dass auch ein mit hohen Drücken beaufschlagtes Reinigungsmittel dem Mehrkanaldüsenkopf zugeführt werden kann, ohne dass dieser zerstört wird. Um Beschädigungen der Lamellen zu vermeiden, besteht der die Lamellen bei Betrieb berührende Abschnitt aus einem weicheren, abriebfesten Material. Ein besonderer Vorteil eines aus einem Elastomer bestehenden weichen Abschnittes ist es, dass dieser durch kostengünstige Verfahren, z.B. durch Gussverfahren, herstellbar ist. In dem weichen Abschnitt ist zweckmäßigerweise eine Ausnehmung bzw. ein Führungskanal vorgesehen, der den in dem härteren Innenabschnitt ausgebildeten Teil der Düse verlängert. Die Mündung bzw. die in Strömungsrichtung gesehen am Ende dieses Führungskanals oder dieser Ausnehmung vorhandene Öffnung wird hier ebenfalls als Düse bezeichnet.

Vorteilhafterweise ist der Mehrkanaldüsenkopf mit Führungselementen versehen. Die Führungselemente erleichtern die Handhabung des Mehrkanaldüsenkopfes an den Stirnseiten der Lamellen.

Gemäß einer diesbezüglich zweckmäßigen Weiterentwicklung ist an dem Mehrkanaldüsenkopf ein Spritzwasserschutz angebracht. Der Spritzwasserschutz erhöht den Bedienungskomfort. Vorteilhafterweise ist der Spritzwasserschutz derart ausgestaltet, dass die Reinigbarkeit des Registers durch die erfindungsgemäße Reinigungsvorrichtung auch in den Ecken- / Kantenbereichen erhalten bleibt. Der Spritzwasserschutz ist vorteilhafterweise leicht montierbar und demontierbar.

Vorteilhafterweise sind die Kammfinger in einer Querschnittsansicht des Mehrkanaldüsenkopfes abgerundet. Die abgerundete Ausgestaltung erleichtert das manuelle Einführen des Mehrkanaldüsenkopfes in die zu reinigenden Lamellenzwischenräume.

Vorteilhafterweise ist zum Abstützen des Reinigungskopfes an den Stirnseiten der Lamellen zwischen den Kammfingern ein abgerundeter Anschlag vorgesehen. Der abgerundete Anschlag ermöglicht ein Abrollen des Mehrkanaldüsenkopfes in seiner Endlage an den Lamellen und somit ein einfaches Variieren des oder der Einsprühwinkel.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Beispiel eines handelsübliches Wärmeaustauscherregisters einer raumlufttechnischen Anlage, zu deren Reinigung die erfindungsgemäße Vorrichtung vorgesehen ist, in perspektivischer Ansicht,
- Figur 2: ein Ausführungsbeispiel des erfindungsgemäßen Mehrkanaldüsenkopfes in einer Draufsicht,
- Figur 3a - c: weitere Ausführungsbeispiele des erfindungsgemäßen Mehrkanaldüsenkopfes jeweils in einer Draufsicht,
- Figur 4a - d: weitere Ausführungsbeispiele des erfindungsgemäßen Mehrkanaldüsenkopfes jeweils in einer Frontansicht,
- Figur 5a: ein bevorzugtes Ausführungsbeispiel des erfindungsgemäßen Mehrkanaldüsenkopfes in einer Frontansicht,
- Figur 5b: das Ausführungsbeispiel gemäß Figur 5a in einer Querschnittsansicht,
- Figur 5c: das Ausführungsbeispiel gemäß Figur 5a in einer Draufsicht,
- Figur 6a-6d: weitere Ausführungsbeispiele des erfindungsgemäßen Mehrkanaldüsenkopfes jeweils in einer Seitenansicht,
- Figur 6e: das Ausführungsbeispiel gemäß Figur 6d in einer Draufsicht
- Figur 7: ein weiteres Ausführungsbeispiel des erfindungsgemäßen Mehrkanaldüsenkopfs in einer Seitenansicht,
- Figur 8: das Ausführungsbeispiel gemäß Figur 7 in einer Frontansicht,
- Figur 9: ein weiteres Ausführungsbeispiel des erfindungsgemäßen Mehrkanaldüsenkopfes mit einer Sprühwinkelarretiervorrichtung in einer Seitenansicht,
- Figuren 10a-c: ein weiteres Ausführungsbeispiel des erfindungsgemäßen Mehrkanaldüsenkopfes mit durchgängigen, langen Führungskanälen in den Kammfingern in einer Seiten-, Front-, bzw. Seitenansicht und
- Figuren 11 a-c: ein weiteres Ausführungsbeispiel des erfindungsgemäßen Mehrkanaldüsenkopfes mit im Bereich der Düsen V-förmig ausgesparten Kammfingern in einer Seiten-, Front-, bzw. Seitenansicht zeigen.

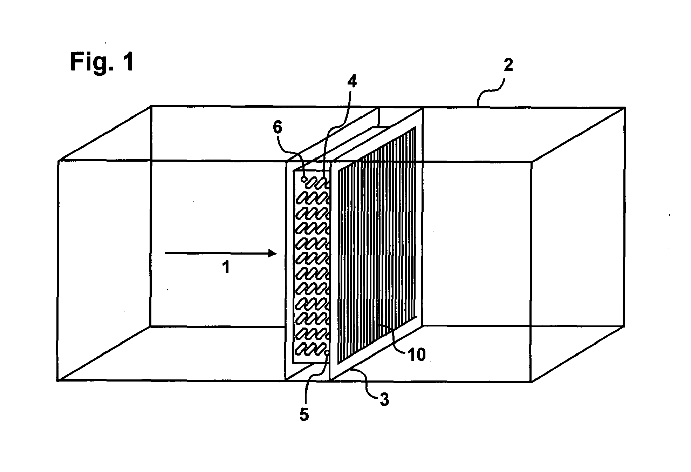

Figur 1 zeigt ein handelsübliches Wärmeaustauscherregister 3 mit Lamellen 10, zu deren Reinigung die erfindungsgemäße Vorrichtung vorgesehen ist. Das Wärmeaustauscherregister 3 ist in einem kanalförmigen Gehäuse 2 einer raumlufttechnischen Anlage angeordnet. Das Wärmeaustauscherregister 3 ist in Richtung eines das Gehäuse 2 durchsetzenden Luftstroms 1 angeordnet und weist Rohrleitungen 4 auf, welche sich in Vorlauf 5 und Rücklauf 6 für ein Heiz- oder Kühlmedium unterteilen lassen. Durch den Wärmeaustausch mit dem Heiz- oder Kühlmedium wird der Luftstrom 1 je nach Bedarf erwärmt oder abgekühlt.

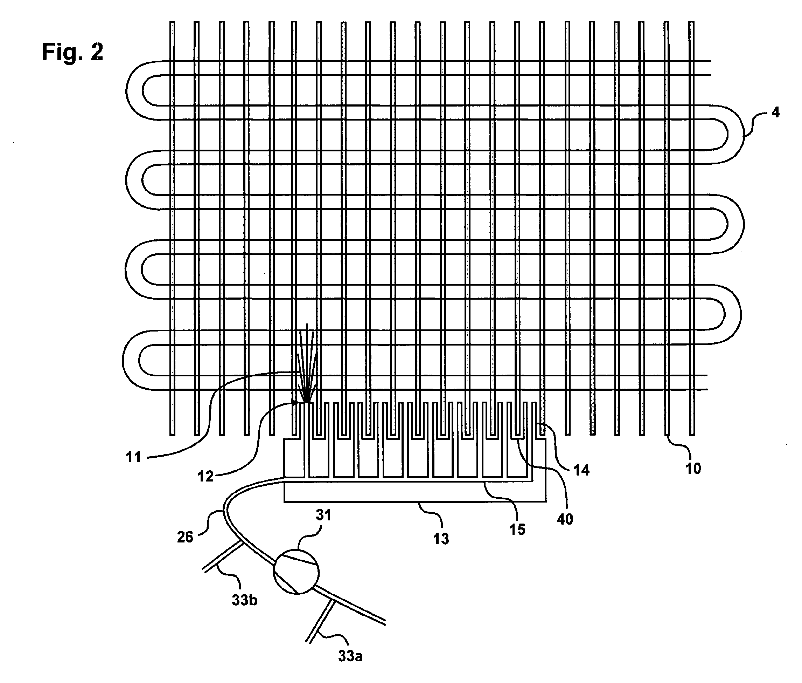

Figur 2 zeigt ein einteiliges Ausführungsbeispiel des erfindungsgemäßen Mehrkanaldüsenkopfs 13 in einer Draufsicht. Der Mehrkanaldüsenkopf 13 ist mit mehreren in einer Reihe angeordneten Düsen 12 ausgerüstet, wobei die Düsen 12 in Kammfingern 14 angeordnet sind. Dabei ist der Mehrkanaldüsenkopf 13 über einen druckfesten Zulaufschlauch 26 mit einer Hochdruckpumpe 31 verbunden, die ihrerseits an einen figürlich nicht dargestellten Reinigungsmittelzulauf angeschlossen ist. Das Reinigungsmittel wird mittels der Hochdruckpumpe 31 komprimiert und gelangt unter Druck über den Zulaufschlauch 26, sowie über einen zentralen Reinigungsmittelkanal 15 zu den Düsen 12.

Die Kammfinger 14 sind an ihrem Einführende möglichst weit voneinander beabstandet, so dass sie einfach / leicht von Hand in den Zwischenraum zwischen den Registerlamellen eingeführt werden können. Im Bereich eines Anschlages 40 verengt sich jedoch der Abstand zwischen den Kammfingern. Auf diese Weise kommt es zu einem exakten Ausrichten der Düsen 12 bezüglich des Lamellenzwischenraumes. Ferner werden möglicherweise leicht verbogenen Endbereiche der Lamellen 10 wieder gerade gebogen. Ein aus den ausgerichteten Düsen 12 austretender Reinigungsmittelstrahl 11 leitet somit nur geringe seitlich gerichtete Kraftkomponenten in die Lamellen 10 ein. Über ein Zusatzmittelschlauch 33a,b können dem Reinigungsmittel in Strömungsrichtung des Reinigungsmittels gesehen vor 33a oder hinter 33b der Hochdruckpumpe 31 Zusatzmittel beigemengt werden.

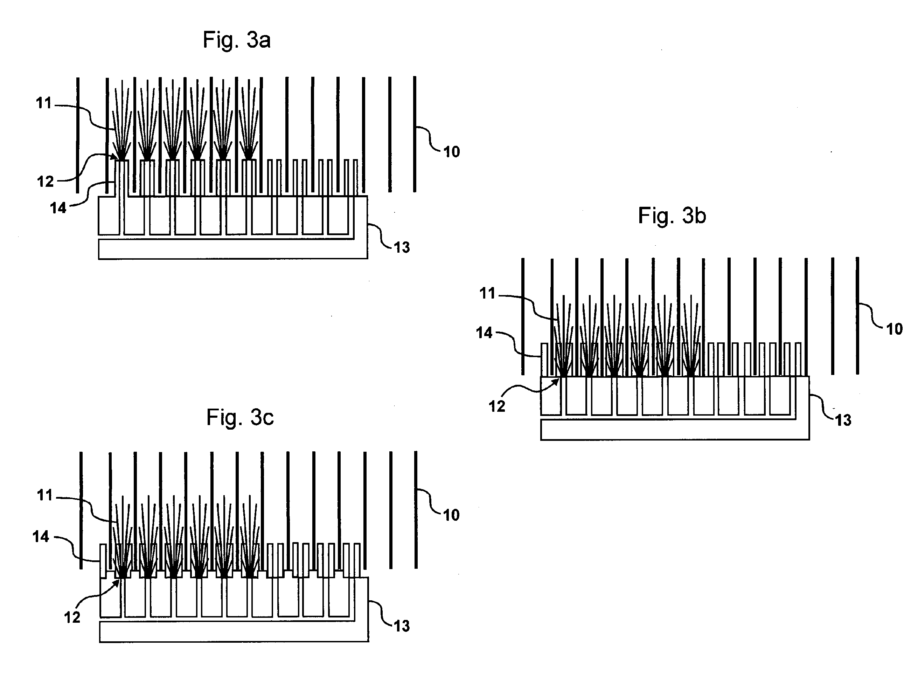

Durch die Länge der Kammfinger 14 im Bereich der Düse kann die Position des Düsenanfangs 12 variiert werden. Je nach Länge des Kammfingers 14 im Bereich der Düse kann der Reinigungsmittelstrahl 11 - wie in Figur 3a gezeigt - zwischen den Lamellen 10, oder wie in Figur 3b dargestellt auf der Höhe des Endes der Lamellen 10 oder - wie in Figur 3c gezeigt ist - vor den Stirnseiten der Lamellen 10 in die Düse 12 abgegeben werden. Mit andern Worten werden die eigentlichen Düsen durch in den Kammfingern 14 vorgesehene Ausnehmungen oder Kanäle verlängert. Diese Ausnehmungen oder Kanäle können gegenüber der eigentlichen Düse leicht verbreitert sein, so dass auch eine Reinigung der Endbereiche der Lamellen ermöglicht ist.

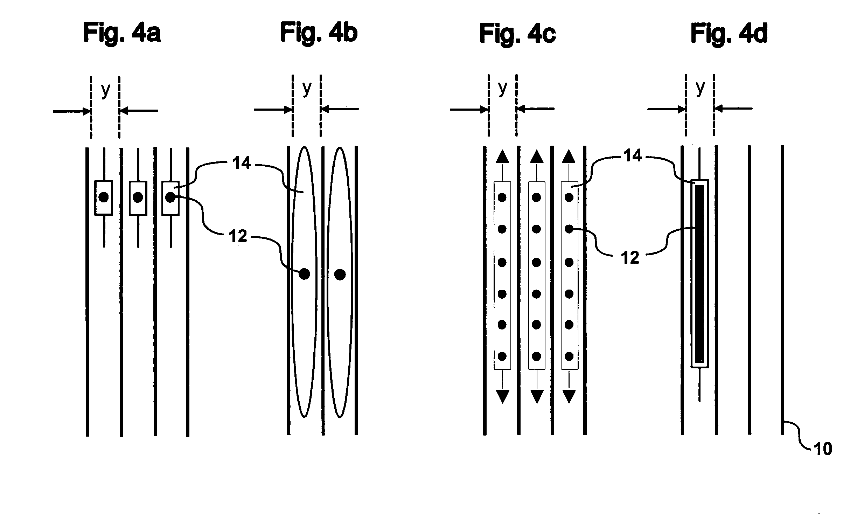

Figur 4a bis 4d zeigen weitere Ausführungsbeispiele des erfindungsgemäßen Mehrkanaldüsenkopfs 13 in einer Frontansicht. Mit "y" ist die Spaltbreite zwischen den Lamellen 10 bezeichnet. Der in Figur 4a gezeigte Mehrkanaldüsenkopf weist Kammfinger 14 auf, die in der Frontansicht rechteckig sind, wobei jeder Kammfinger 14 jeweils mit einer Düse 12 ausgerüstet ist. In dem in Figur 4b gezeigten Ausführungsbeispiel weist der Kammfinger 14 im Querschnitt runde Kammfinger 14 auf, die in der gezeigten Frontansicht spitz zulaufende Enden ausbilden. Diese Form erleichtert das Einführen der Kammfinger 14 eines Mehrkanaldüsenkopfes 13 zwischen die Lamellen 10 eines Registers 3. In Figur 4c ist ein Mehrkanaldüsenkopf 13 gezeigt, dessen Kammfinger 14 eine rechteckiger Form aufweisen und mit mehreren Düsen 12 ausgerüstet sind. In Figur 4d ist ein rechteckiger Kammfinger 14 gezeigt, der an Stelle mehrerer Düsen 12 eine einzige Düse 12 jedoch mit einer Öffnung aufweist, welche sich nahezu durch den gesamten Kammfinger 14 erstreckt.

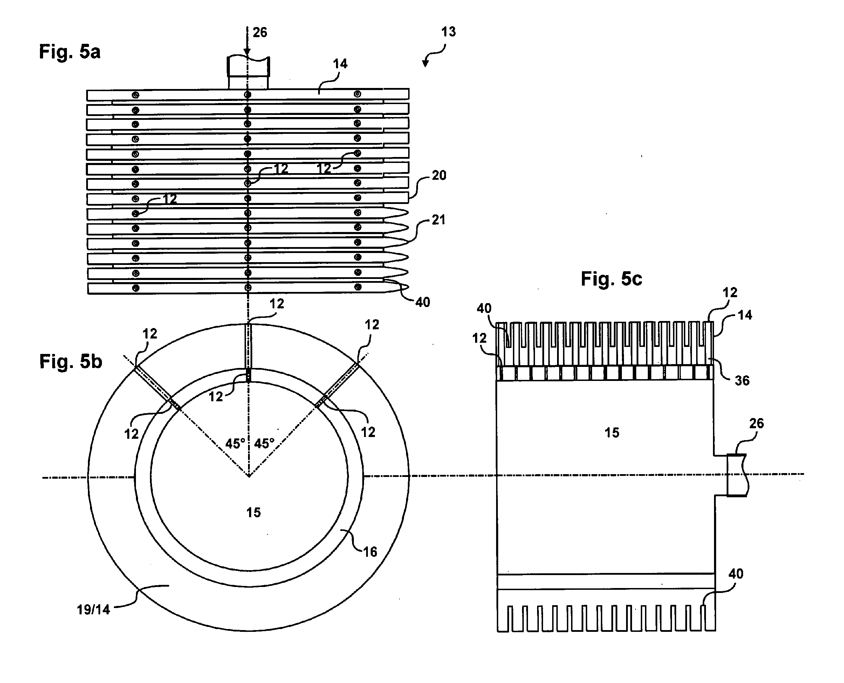

Fig. 5a zeigt einen zylindrischen Mehrkanaldüsenkopf 13, in dessen Kammfinger 14 drei Düsen 12 nebeneinander angeordnet sind. Die Kammfinger 14 weisen in der gezeigten Ansicht eckige Enden 20 oder aber abgerundete Enden 21 auf. Figur 5b zeigt den zylindrischen Mehrkanaldüsenkopf gemäß Figur 5a in einer quer geschnittenen Seitenansicht. Aus dieser Ansicht wird deutlich, dass der Mehrkanaldüsenkopf 13 einen harten, hier metallischen Innenabschnitt 16 mit einem zentralen Reinigungsmittelkanal 15 aufweist, der auch als Düsen- oder Druckkammer bezeichnet werden kann, wobei der Reinigungsmittelkanal 15 zur Aufnahme des mit hohem Druck beaufschlagten Reinigungsmittels vorgesehen ist. An dem harten Innenabschnitt 16 ist ein weicher Abschnitt 19, hier aus Kunststoff, befestigt, der die Kammfinger 14 ausbildet. Dabei spannen die beiden äußeren Düsen 12 und die mittige Düse 12 bezüglich des zentralen Reinigungsmittelkanals 15 jeweils einen Winkel von 45 Grad auf. Auf diese Weise treten die von dem Mehrkanaldüsenkopf 13 abgegebenen Reinigungsmittelstrahlen in verschiedenen Winkeln in den von benachbarten Lamellen begrenzten Zwischenraum ein. Die Rohrleitungen 4 des Wärmeaustauscherregisters 3 schotten Schattenbereiche beispielsweise von dem mittigen Reinigungsmittelstrahl ab, die an ihrer von der mittigen Düse 12 abgewandten Seite liegen. Die Schattenbereiche der mittigen Düse 12 werden auf Grund der winkligen Anordnung der Düsen 12 jedoch von den Reinigungsmittelstrahlen der beiden äußeren Düsen 12 überstrichen und auf diese Weise gereinigt.

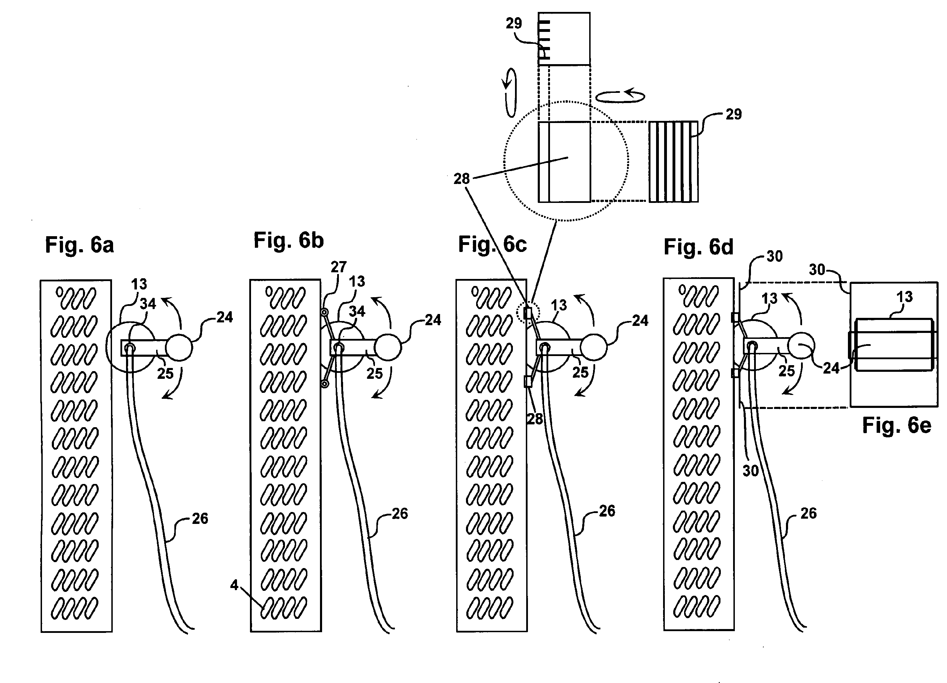

Figuren 6a bis 6c zeigen ein weiteres Ausführungsbeispiel eines zylindrischen Mehrkanaldüsenkopfes 13 in einer Seitendarstellung. Zur besseren Handhabung ist an dem Mehrkanaldüsenkopf 13 ein Griff 24 vorgesehen, der mittels eines Führungsarmes 25 an dem Mehrkanaldüsenkopf 13 befestigt ist. An dem Griff sind bei einem nicht gezeigten Ausführungsbeispiel Mittel vorgesehen, welche die Montage einer Haltestange oder einer Lanze ermöglichen. Der Griff 24 ist fest mit dem Führungsarm 25 verbunden, wobei der Führungsarm 25 an dem zylindrischen Abschnitt des Mehrkanaldüsenkopfes 13 an einer Verbindungsachse 34 angelegt und auf diese Weise verschwenkbar ist. Die Schwenkrichtungen sind in den Figuren 6a bis 6d durch Pfeile dargestellt.

Der Mehrkanaldüsenkopf 13 verfügt ferner über Führungsrollen 27 - wie in Figur 6b gezeigt - oder - wie in Figur 6c dargestellt ist - über Führungskammblöcke 28. Die Führungskammblöcke 28 weisen - wie in der Detailansicht der Figur 6c erkennbar ist - Führungsrillen 29 auf. Der Abstand der Führungsrillen 29 entspricht dem Abstand der Lamellen 10, so dass die Führungsrillen 29 die Stirnseiten der Lamellen 10 aufnehmen. Die Führungsrollen und die Führungskammblöcke unterstützen einen Nutzer des Mehrkanaldüsenkopfes 13 und erleichtern die genauere Führung des Mehrkanaldüsenkopfes 13. Zum Schutz vor Spritzwasser, welches an den Lamellen 10 und/oder den Rohren 4 oder sonstigen Komponenten der Wärmeaustauscherregisters 3 abprallen kann, ist bei dem in Figur 6d gezeigten Mehrkanaldüsenkopf 13 ein Spritzwasserschutz 30 befestigt. Figur 6e zeigt den Mehrkanaldüsenkopf mit der Spritzwasserschutzvorrichtung in einer Draufsicht.

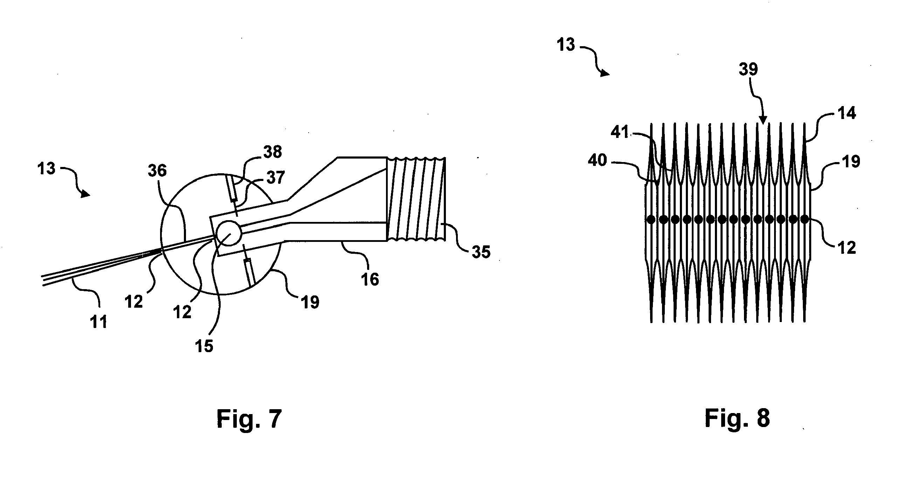

Figur 7 zeigt ein weiteres Ausführungsbeispiel des erfindungsgemäßen Mehrkanaldüsenkopfes 13 in einer Seitenansicht. Wie das in den Figuren 5a bis 5c gezeigte Ausführungsbeispiel weist auch der in Figur 7 dargestellte Mehrkanaldüsenkopf einen harten Innenabschnitt 16 mit dem Reinigungskanal 15 und einen weichen, aus Kunststoff bestehenden Abschnitt 19 auf. Es ist erkennbar, dass ein Teilabschnitt der Düsen 12 in dem Innenabschnitt 16 vorgesehen ist. In dem weichen Abschnitt 19 sind lediglich mit dem in dem Innenabschnitt angeordneten Düsenabschnitt fluchtende Ausnehmungen bzw. Führungskanäle 36 vorgesehen, die den Durchtritt von Reinigungsmitteln durch den Kunststoffabschnitt 19 ermöglichen. Die Mündung dieser Ausnehmungen 36 wird hier ebenfalls als Düse 12 bezeichnet. Der weiche Abschnitt 19 ist mittels Schraubverbindungen 37 mit dem harten Innenabschnitt 16 verbunden, wobei Aussparungen 38 im weichen Abschnitt 19 ein Festschrauben dieses Abschnittes 19 an dem harten Innenabschnitt 16 ermöglichen. Zur Befestigung einer nicht gezeigten Haltestange dient ein Gewindeanschlussstück 35.

Figur 8 zeigt ein bevorzugtes Ausführungsbeispiel des erfindungsgemäßen Mehrkanaldüsenkopfes 13 in einer Frontansicht. Der hier gezeigte Mehrkanaldüsenkopf 13 ist zylindrisch ausgestaltet und verfügt über einen nicht sichtbaren metallischen Innenabschnitt 16 sowie über einen die Kammfinger 14 ausbildenden weichen Abschnitt 19. Es ist erkennbar, dass die Kammfinger 14 an einer ihrer möglichen Einführseiten 39 am weitesten von einander beabstandet sind und anschließend im Wesentlichen parallele Seitenwandungen aufweisen. Auf diese Weise ist das Einführen zwischen die Lamellen 10 vereinfacht. Im Bereich eines Anschlags 40 an dem die Lamellen 10 während des Reinigens anliegen sind Führungsschultern 41 ausgebildet, so dass die Düsen 12 des Mehrkanaldüsenkopfes 13 zielgenau auf den von den Lamellen begrenzten Zwischenraum ausgerichtet werden.

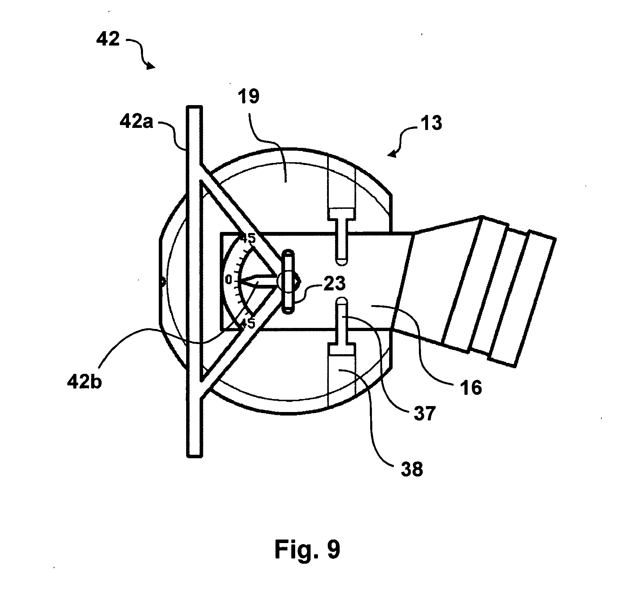

Die Figur 9 zeigt einen Mehrkanaldüsenkopf 13 gemäß Figur 8. Der gezeigte Mehrkanaldüsenkopf 13 weist jedoch ein Arretierungsmittel 42 auf, das an beiden Seiten des harten Innenabschnitts 16 zu befestigen bzw. fest mit diesem verschraubbar ist. Das Arretierungsmittel 42 weist einen zur Frontseite hin plan ausgebildeten Anlegerahmen 42a auf, mit dem der Mehrkanaldüsenkopf 13 bei Betrieb an den Stirnseiten der Lamellen 10 anliegt. Durch Lösen der Befestigungsschrauben 23 können beliebige Neigungen der Düsen 12 bezüglich des Anlegerahmens 42a eingestellt werden, wobei eine Winkelanzeige 42b das Ablesen des Neigungswinkels ermöglicht.

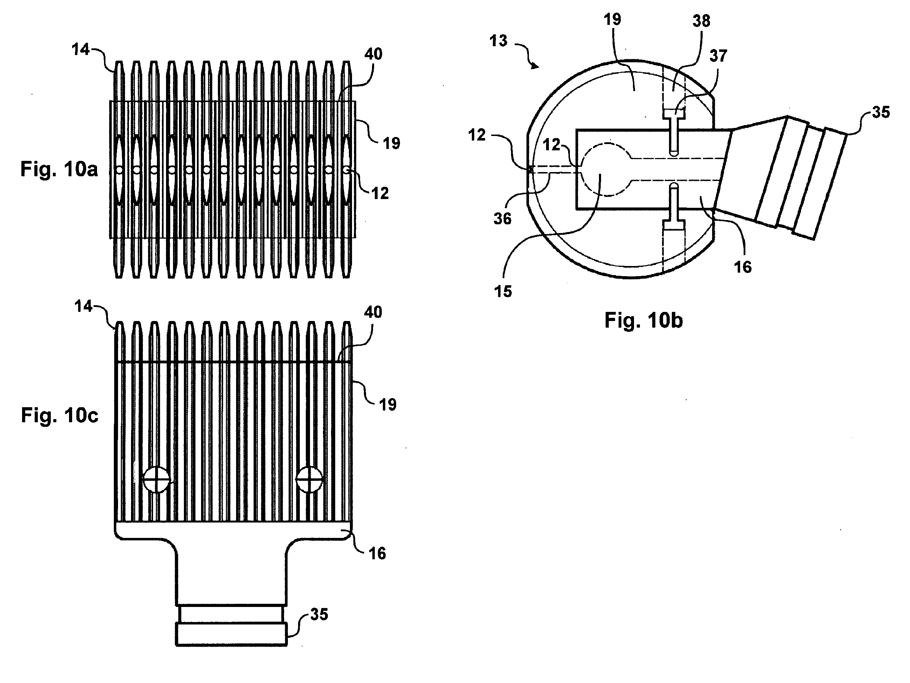

Der in den Figuren 10a bis 10c dargestellte Mehrkanaldüsenkopf 13 entspricht im Wesentlichen dem in Figur 7 oder Figur 8 gezeigten Ausführungsbeispiel, wobei die Kammfinger jedoch lediglich einführseitig verjüngt ausgebildet sind. Die Kammfinger 14 bilden aber keine Einführschultern aus. Der Anschlag 40 kann in dieser Konstruktionsform auch von dem harten metallischen Innenabschnitt 16 ausgebildet sein.

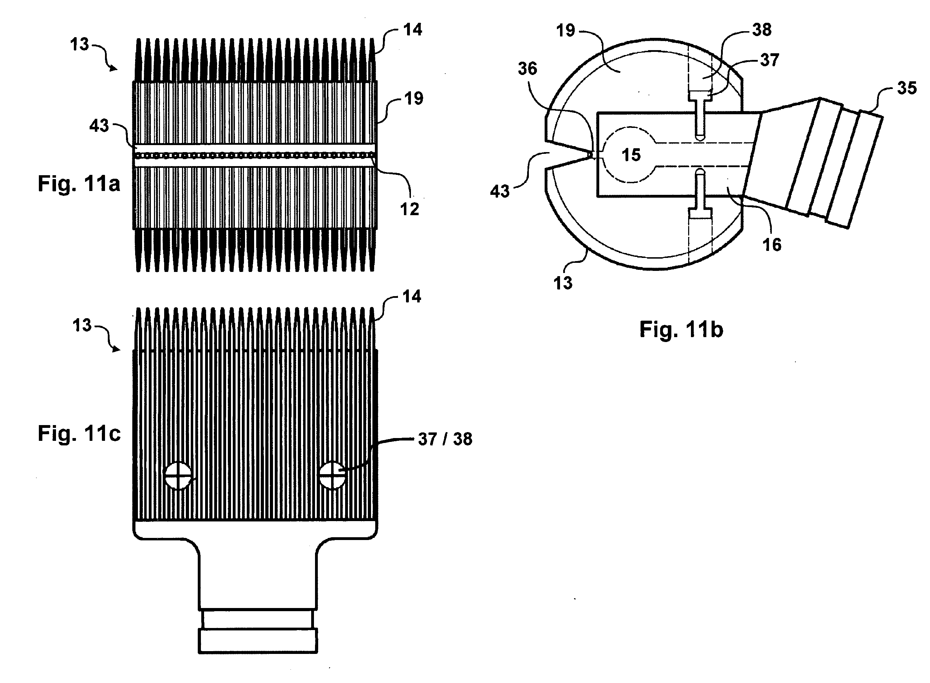

Die Figuren 11a bis 11c zeigen einen Mehrkanaldüsenkopf 13 gemäß den Figuren 10a bis 10c. Der in den Figuren 11a bis 11c dargestellte Mehrkanaldüsenkopf 13 weist Kammfinger 14 auf, die einführseitig wesentlich schmaler ausgebildet sind als die in den Figuren 10a bis 10c gezeigten Kammfinger 14. Das Einbringen von rohrförmigen Ausnehmungen bzw. Führungskanälen 36 in die Kammfinger 14 ist daher nur erschwert möglich. In dem in den Figuren 11a bis 11c gezeigten Ausführungsbeispiel wurde daher eine sich zur Einführseite des Mehrkanaldüsenkopfes 13 hin erweiternde Ausnehmung 43 vorgesehen, die eine kegelstumpfförmige Kontur aufweist.

## Patentansprüche

1. Mehrkanaldüsenkopf (13) zur Reinigung von Lamellen (10) eines Wärmeaustauscherregisters (3), der mehrere Düsen (12) aufweist, **dadurch gekennzeichnet, dass** die Düsen (12) in einem in den Zwischenraum zwischen die Lamellen (10) einführbaren Kammfinger (14) angeordnet sind und jeder Kammfinger (14) wenigstens eine Düse (12) aufweist, wobei die Kammfinger (14) so ausgestaltet sind, dass diese bei Aufsetzen des Mehrkanaldüsenkopfs (13) auf die Stirnseiten der Lamellen (10) die Düsen (12) auf den von den Lamellen (10) begrenzten Zwischenraum hin ausrichten.

2. Mehrkanaldüsenkopf (13) nach Anspruch 1, **dadurch gekennzeichnet, dass** die Düsen in wenigstens einer Reihe angeordnet sind.

3. Mehrkanaldüsenkopf (13) nach Anspruch 2, **dadurch gekennzeichnet, dass** die in einer Reihe angeordneten Düsen (12) gleichmäßig voneinander beabstandet sind, wobei der Abstand zwischen 1-6 mm beträgt.

4. Mehrkanaldüsenkopf (13) nach einem der vorhergehenden Ansprüche, **dadurch gekennzeichnet, dass** an mindestens einem Kammfinger (14) mehr als eine Düse angeordnet sind.

5. Mehrkanaldüsenkopf (13) nach Anspruch 4, **dadurch gekennzeichnet**, und dass die Düsen (12) wenigstens eines Kammfingers (14) in verschiedenen Winkeln zueinander angeordnet sind.

6. Mehrkanaldüsenkopf (13) nach einem der vorhergehenden Ansprüche, **dadurch gekennzeichnet, dass** der Mehrkanaldüsenkopf (13) einen Griff (24) aufweist.

7. Mehrkanaldüsenkopf (13) nach Anspruch 6, **dadurch gekennzeichnet, dass** der Griff (24) über einen Führungsarm (25) mit einer Verbindungsachse (34) verbunden ist.

8. Mehrkanaldüsenkopf (13) nach einem der vorhergehenden Ansprüche, **dadurch gekennzeichnet, dass** die Kammfinger verjüngt ausgebildet sind.

9. Mehrkanaldüsenkopf nach einem der vorhergehenden Ansprüche, **dadurch gekennzeichnet, dass** zur leichteren Einführung der Kammfinger (14) zwischen die Lamellen der Abstand benachbarter Kammfinger (14) einführseitig mindestens doppelt so groß wie die Dicke der Lamellen ist.

10. Mehrkanaldüsenkopf (13) nach einem der vorhergehenden Ansprüche, **dadurch gekennzeichnet, dass** an dem von dem Einführende abgewandten Ende der Kammfinger (14) Ausrichtungsschultern ausgebildet sind.

11. Mehrkanaldüsenkopf (13) nach einem der vorhergehenden Ansprüche, **dadurch gekennzeichnet, dass** ein mechanisch widerstandsfähiger Innenabschnitt vorgesehen ist, an dem ein die Kammfinger (14) ausbildender Abschnitt aus einem weichen Werkstoff (19) gehalten ist.

12. Mehrkanaldüsenkopf (13) nach einem der vorhergehenden Ansprüche, **dadurch gekennzeichnet, dass** der Mehrkanaldüsenkopf (13) mit Führungselementen (27, 28) versehen ist.

13. Mehrkanaldüsenkopf (13) nach einem der vorhergehenden Ansprüche, **dadurch gekennzeichnet, dass** an dem Mehrkanaldüsenkopf ein Spritzwasserschutz (30) angebracht ist.

14. Mehrkanaldüsenkopf (13) nach einem der vorhergehenden Ansprüche, **dadurch gekennzeichnet, dass** die Kammfinger (14) in einer Querschnittsansicht des Mehrkanaldüsenkopfes (13) abgerundet sind.

15. Mehrkanaldüsenkopf (13) nach einem der vorhergehenden Ansprüche, **dadurch gekennzeichnet, dass** zum Abstützen an den Stirnseiten der Lamellen ein Anschlag (40) vorgesehen ist.

16. Mehrkanaldüsenkopf (13) nach einem der Ansprüche 1 bis 14, **gekennzeichnet durch** auf die Stirnseiten der Lamellen aufsetzbare Arretierungsmittel (42) zum Einstellen eines Einsprühwinkels.

17. Vorrichtung zum Reinigen von Lamellen eines Wärmeaustauscherregisters mit einem mehrere Düsen aufweisenden Mehrkanaldüsenkopf, einer mit dem Mehrkanaldüsenkopf verbundenen Hochdruckpumpe, welche mit einem Reinigungsmittelzulauf verbunden ist, **gekennzeichnet durch** einen Mehrkanaldüsenkopf gemäß einem der vorhergehenden Ansprüche.
